# EUROPEAN PATENT SPECIFICATION

(11) **EP 4 190 960 B1**
(45) Date of publication and mention of the grant of the patent: **18.02.2026**
(21) Application number: 21860109.4
(22) Date of filing: 09.08.2021
(51) Int. Cl.: D06F 39/02, D06F 39/08, D06F 37/26

(54) **NOZZLE STRUCTURE, ADDITIVE FEEDING DEVICE AND WASHING MACHINE**
DÜSENSTRUKTUR, ADDITIVZUFUHRVORRICHTUNG UND WASCHMASCHINE
STRUCTURE DE BUSE, DISPOSITIF D'ALIMENTATION EN ADDITIF ET MACHINE À LAVER

(30) Priority: 31.08.2020 CN 202010897286; 04.09.2020 CN 202010919601
(43) Date of publication of application: 07.06.2023
(73) Proprietor: CHONGQING HAIER DRUM WASHING MACHINE CO., LTD., Chongqing 400000 (CN); HAIER SMART HOME CO., LTD., Laoshan District Qingdao Shandong 266101 (CN)
(72) Inventor: HUANG, Tao, Qingdao, Shandong 266101 (CN); ZHOU, Bingheng, Qingdao, Shandong 266101 (CN); ZHANG, Huacheng, Qingdao, Shandong 266101 (CN)
(74) Representative: Beck & Rössig European Patent Attorneys
(86) International application number: PCT/CN2021/111396
(87) International publication number: WO 2022/042270

(56) References cited:
- CA-A1- 2 031 563
- CN-A- 101 424 037
- CN-U- 212 771 554
- DE-A1- 4 427 252
- GB-A- 732 473
- JP-A- 2007 155 170
- US-A1- 2020 216 998
- US-A1- 2021 131 018

## Description

The present invention belongs to the technical field of clothing treatment equipment, specifically relates to an additive delivery device for a washing machine, in particular to a nozzle structure for delivering an additive solution to a washing machine.

An existing washing machine is generally provided with an outer drum for holding washing water, a rotatable inner drum is disposed in the outer drum, and dehydration holes communicating with the inside and the outside are formed in the inner drum, so that the washing water flowing into the outer drum can mutually flow inside and outside the inner drum by the dehydration holes, and then, the effects that the washing water is in contact with a to-be-treated load delivered to the inner drum and the load is treated by using the washing water are achieved.

A way of delivering additives to the above-mentioned existing washing machine is shown as follows: additives are delivered, by an additive delivery device, to a pipeline communicating with the outer drum of the washing machine, and then, the delivered additives flow into the outer drum of the washing machine along the pipeline. Therefore, the additives delivered in an existing way are located inside the outer drum and outside the inner drum of the washing machine so as not to be in direct contact with the load delivered to the inner drum.

Then, when the washing machine performs a washing program, the delivered additives are mixed with the washing water flowing into the outer drum, and part of the washing water mixed with the additives flows into the inner drum by the dehydration holes and is in contact with the to-be-treated load in the drum, so that a small part of the additives mixed into the washing water is in contact with the load to act on the load. Therefore, there are problems including low use efficiency of the delivered additives and additive waste in a traditional additive delivery way.

At the same time, in a traditional additive delivery way, in order to ensure that the additives delivered between the outer drum and the inner drum are in contact with the to-be-treated load in the inner drum, a great deal of water needs to flow into the outer drum until the water level of the washing water in the outer drum is higher than that in the inner drum, and thus, the purposes that the washing water flows into the inner drum by the dehydration holes and the additives are in contact with the load in the inner drum are achieved. Therefore, there is still a problem of overmuch water for additive delivery in the traditional additive delivery way.

Besides, an existing additive delivery device is generally provided with a housing forming a water box, and the water box is connected in series to a water inlet pipe of the washing machine; and when inlet water of the washing machine flows through the water box after additives to be delivered flow into the water box by a waterway, the additives to be delivered in the water box are flushed out, the flushed additives to be delivered flow into the inside of the outer drum and the outside of the inner drum of the washing machine along with the inlet water, and thus, the purpose of delivering the additives is achieved.

However, there are problems in the additive delivery device with the above-mentioned structure:
1. the additives need to be delivered by using the water box, so that a delivery path of the additives is extended, and residues of the additives in the delivery path are increased, and the actual delivery quantity is reduced; and
2. the additives are flushed into the outer drum by the inlet water flowing through the water box; and since the section of the water box is larger than that of the waterway, the flow speed of a water flow flowing through the water box can be reduced, which easily causes the problem that the additives cannot be flushed in time by a water flow flowing through the additives and are remained in the water box.

A nozzle structure comprising the features of claim 1 is known from DE 44 27 252 A1. More specifically, DE 44 27 252 A1 discloses hollow cone or tangential nozzles forming a hollow cone as a spray pattern and suitable in almost all areas of process engineering, for example in flue gas desulphurisation, in waste incineration, in the food industry and in the pharmaceutical industry, a wide variety of liquids are sprayed into an air, steam or gas stream in order to bring about large-scale contact between the resulting liquid droplets and a gaseous atmosphere. Said spray nozzle for producing a conical jet, has a nozzle body enclosing an interior space, which has an inlet opening leading into the interior space and defining an inflow direction, and an outlet opening which is opposite the inlet opening and whose outflow direction coincides with the inflow direction, and a swirl body arranged in the interior space, which has an inflow opening which is in fluid communication with the inlet opening and at least one outflow opening which opens laterally outwards with respect to the inflow direction, which imparts a swirl with respect to the inflow direction to the fluid emerging from the outflow openings. The nozzle body and the swirl bode are made from ceramic material.

Another liquid spray nozzle for providing a flat spray is known from GB 732 473 A. A jet emerging from an orifice spreads out laterally in fan-like form.

The object of the present invention is to provide an alternative nozzle structure suitable for delivering an additive solution to a washing machine.

This technical problem is solved by a nozzle structure comprising the features of claim 1. Advantageous embodiments are set out in further claims.

After the above-mentioned technical solutions are adopted, the nozzle structure described in the present disclosure has the following beneficial effects: due to the above-mentioned arrangement, the tangential acceleration of the water flow flowing towards the jet outlet in the nozzle structure can be increased, so that an outlet water flow at the jet outlet is dispersed around to achieve an effect that the water flow flowing out of the jet outlet of the nozzle structure is jetted in a shape of conical dispersion, and then, the significant technical progress of increasing the coverage area of the outlet water from the nozzle structure is achieved. More particularly, by using the above-mentioned nozzle structure, the jet area of the jetted additive solution can be increased, then, the additive solution delivered to the inner drum by the additive delivery device by virtue of the nozzle structure can be in sufficient contact with the load in the drum, and then, the significant technical progress of improving the washing effect of the washing machine is achieved.

At the same time, the present disclosure is simple in structure, significant in effect and suitable for popularization and application.

The nozzle structure may be implemented in an additive delivery device as indicated in claim 6 and the latter may be implemented in a washing machine as indicated in claim 14.

By the additive delivery device additives are directly delivered outwards by a water supply waterway. The outlet of the water supply waterway is connected to a nozzle structure, and the nozzle structure jets the additives supplied by the water supply waterway.

In the washing machine provided with the above-mentioned additive delivery device, the purpose of directly delivering additives into an inner drum is achieved, and further, the purpose of increasing the utilization ratio of a detergent by achieving the direct contact between the delivered detergent and the load to be treated in the inner drum is achieved. The inlet of the water supply waterway of the additive delivery device communicates with a water inlet pipe of the washing machine, and the nozzle structure of the additive delivery device jets towards the inner drum of the washing machine.

Compared with the prior art, this provides the following beneficial effects:
1. Due to the above-mentioned arrangement, the additives are directly delivered outwards by the waterway disposed on the delivery device, and the additives are prevented from passing through a water box, so that not only are the flowing paths of the additives shortened, but also the quantity of flushing water required for additive delivery is reduced, and the utilization ratio of the additives is greatly increased. At the same time, the additive solution flowing out of the waterway is directly jetted by the nozzle structure, so that the coverage area of the jetted additive solution is increased, and the additive solution can be directly jetted onto the to-be-treated load deep in the inner drum.
2. At the same time, the washing machine is provided with the above-mentioned additive delivery device, so that the additives in the washing machine directly flow to the nozzle structure by the water supply waterway and are directly jetted into the inner drum by the nozzle structure, then, the additives in the washing machine directly flow into the inner drum by the waterway of the delivery device and are jetted onto the to-be-treated load without passing through a water box and an outer drum outside the inner drum, and then, the purpose of directly jetting the additive solution onto the to-be-treated load in the inner drum is achieved.
3. Besides, due to the above-mentioned arrangement, the washing machine provided with the above-mentioned additive delivery device can achieve the purpose that the additive solution formed by mixing the additives with a small deal of inlet water in the water supply waterway is directly jetted onto the to-be-treated load in the inner drum, and then, the utilization ratio of the delivered additives is significantly increased.

Ways for carrying out the invention will be described in detail below in conjunction with accompanying drawings. In the drawings:
Fig. 1 to Fig. 3 are schematic structural views of a washing machine at different viewing angles in an embodiment of the present invention;
Fig. 4 is a schematic structural view of a section A-A in Fig. 3 in an embodiment of the present invention;
Fig. 5 is a schematic structural view of a washing machine with a first part of an upper cover being removed in an embodiment of the present invention;
Fig. 6 is a schematic top view of a washing machine with a first part of an upper cover being removed in an embodiment of the present invention;
Fig. 7 and Fig. 8 are schematic structural views of a washing machine with an additive delivery device being exploded in an embodiment of the present invention;
Fig. 9 is a schematic structural view of a nozzle structure in an embodiment of the present invention;
Fig. 10 is a schematic structural view of a section B-B in Fig. 9 in an embodiment of the present invention; and
Fig. 11 and Fig. 12 are schematic views of an exploded structure of a nozzle structure at different viewing angles in an embodiment of the present invention.

Description for main elements in the drawings:
100, delivery device; 200, outer drum; 300, inner drum; 400, window pad; 500, nozzle structure; 600, guide pipe; 1, water supply waterway; 2, housing; 3, upper cover; 31, first part; 32, second part; 4, liquid storage cavity; 5 liquid storage box; 6, pump; 7, communicating vessel; 8, liquid pumping flow channel; 11, outlet; 12, inlet; 13, liquid suction hole; 51, jet pipe; 52, spray head; 53, jet outlet; 54, water outlet cavity; 55, connector; 56, flow channel; 57, end cover; 58, annular folding edge; 59, water hole; 81, inlet; and 82, outlet.

It should be noted that these accompanying drawings and text descriptions are intended to explain the concept of the present invention for the skilled in the art with reference to specific embodiments, rather than to limit the conception scope of the present invention in any way.

In order to make objectives, technical solutions and advantages of the embodiments of the present invention clearer, the technical solutions in the embodiments will be described clearly and completely below in conjunction with accompanying drawings in the embodiments of the present invention. The following embodiments are intended to describe the present invention, rather than to limit the scope of the present invention.

In the description of the present invention, it should be noted that directional or positional relationships indicated by terms such as "upper", "lower", "front", "rear", "left", "right", "vertical", "inner" and "outer" are directional or positional relationships based on the accompanying drawings, are merely intended to facilitate describing the present invention and simplifying the description, rather than to indicate or imply that the appointed device or element has to be located in a specific direction or structured and operated in the specific direction so as not to be understood as limitations on the present invention.

In the description of the present invention, it should be noted that terms "mounted", "connected" and "connection" should be understood in a broad sense unless otherwise specified and defined, for example, "connection" may be fixed connection or detachable connection or an integrated connection, may be mechanical connection or electrical connection, and may be direct connection or indirect connection by an intermediate medium. For those of ordinary skill in the art, the specific meanings of the above terms in present invention may be understood according to specific situations.

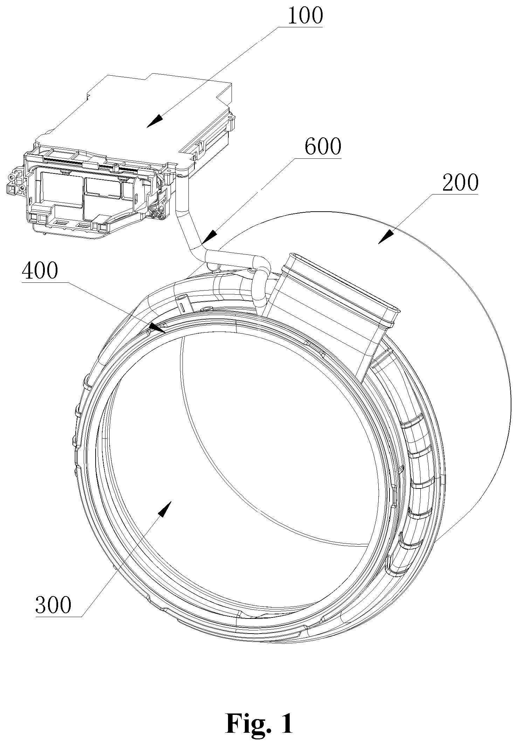

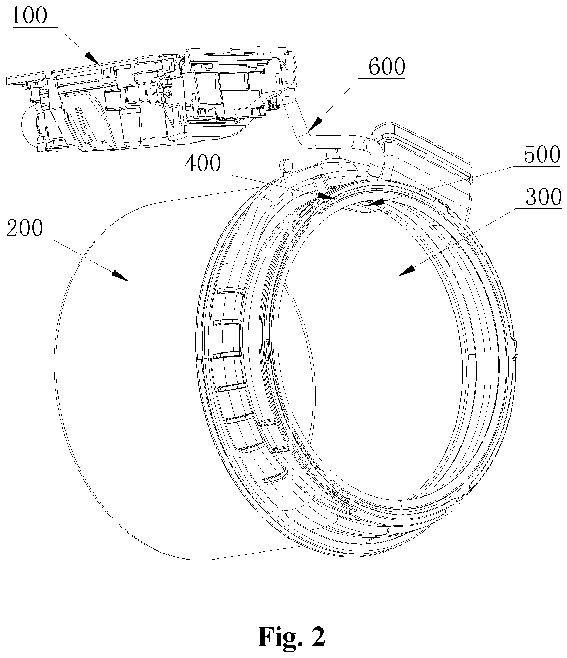

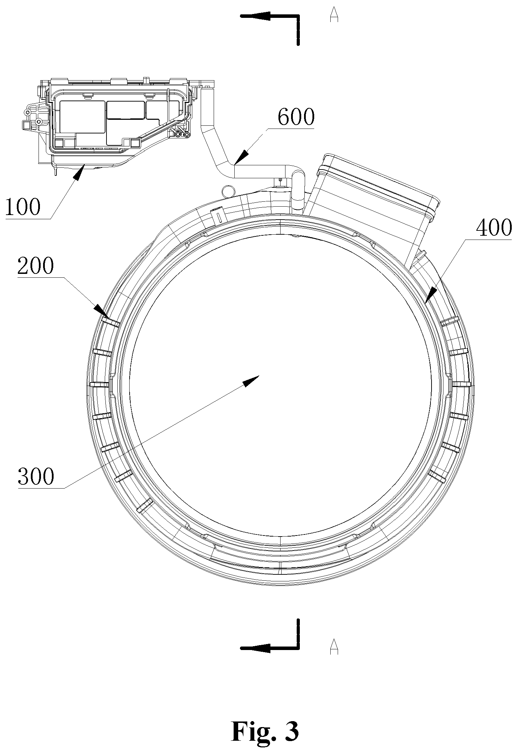

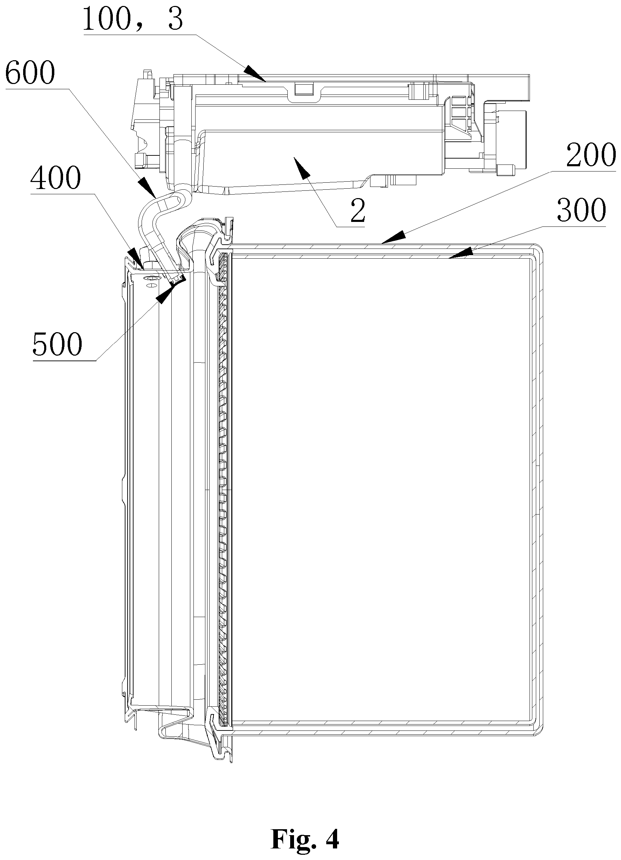

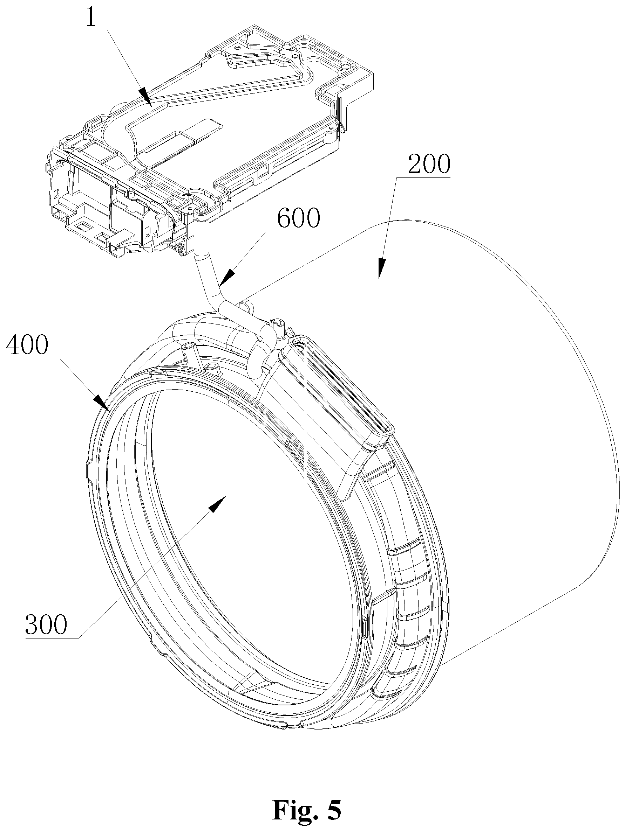

As shown in Fig. 1 to Fig. 8, further introduced in an embodiment of the present invention is a washing machine including an outer drum 200 configured to hold water, a rotatable inner drum 300 mounted in the outer drum 200 and configured to hold a to-be-treated load, and an additive delivery device 100 configured to directly deliver additives to the inner drum 300. Due to the above-mentioned arrangement, the washing machine can achieve the use effect that the additives are directly delivered to the inner drum 300 and are directly jetted onto the to-be-treated load in the inner drum 300, and then, the significant technical progress of increasing the utilization ratio of the additives is achieved.

As shown in Fig. 1 to Fig. 8, the additive delivery device 100 in an embodiment of the present invention includes a water supply waterway 1 configured to allow inlet water entering the additive delivery device 100 to flow through; a delivery unit configured to deliver additives to the water supply waterway 1; and a nozzle structure 500, an outlet 11 of the water supply waterway 1 being connected to the nozzle structure 500, and the nozzle structure 500 being disposed towards the inside of the inner drum 300 of the washing machine. When the additives are delivered, a small deal of inlet water flows into the water supply waterway, so that the additives are mixed with the small deal of inlet water in the water supply waterway 1 to form an additive solution, and the additive solution supplied by the water supply waterway 1 may be directly jetted onto the to-be-treated load in the inner drum 300 by the nozzle structure 500, so that the utilization ratio of the delivered additives is remarkably increased.

Due to the above-mentioned arrangement, the additives are directly delivered outwards by the waterway disposed on the delivery device 100, and the additives are prevented from flowing through a water box, so that not only are the flowing paths of the additives shortened, but also the quantity of flushing water required for additive delivery is reduced, and the utilization ratio of the additives is greatly increased.

### Embodiment 1

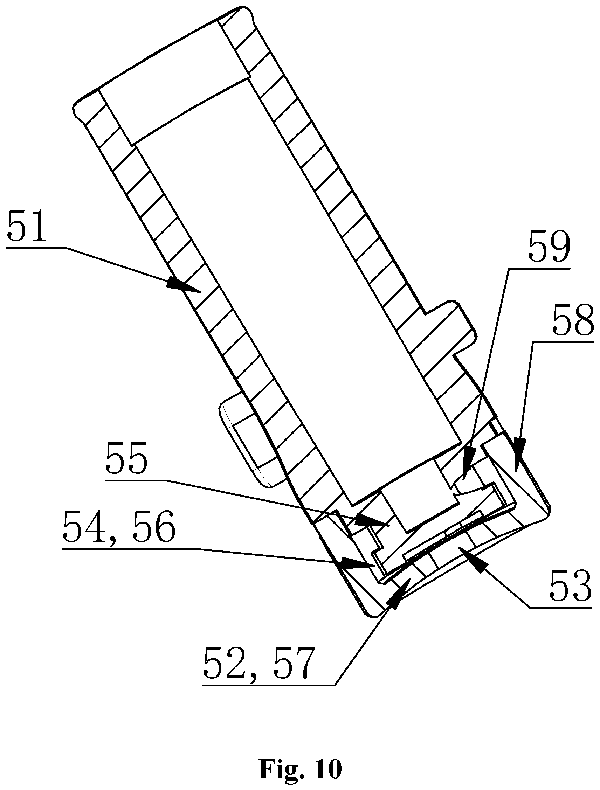

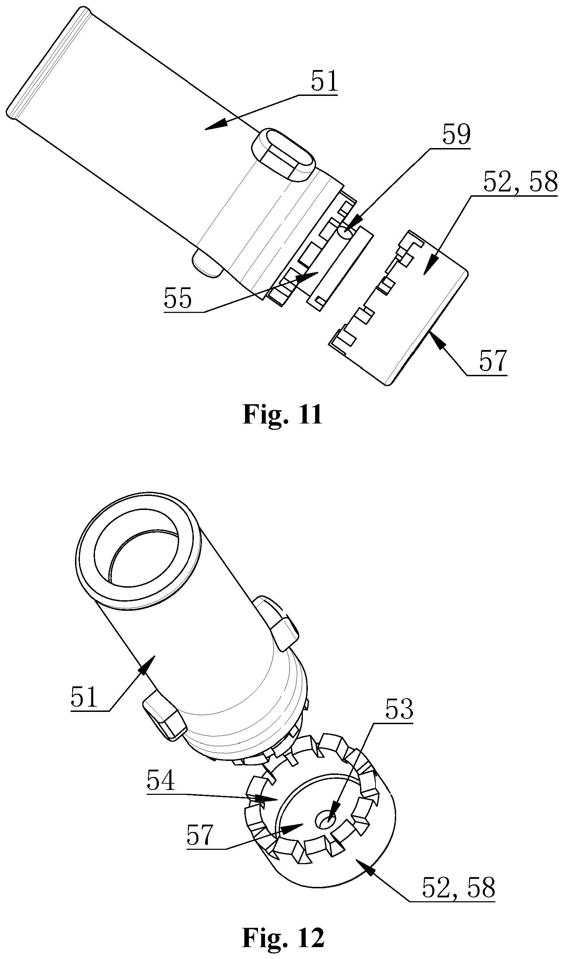

As shown in Fig. 1 to Fig. 12, introduced is a nozzle structure including a jet pipe 51, wherein an outlet end of the jet pipe 51 is provided with a spray head 52, the spray head 52 is provided with a jet outlet 53, and a flow channel 56 by which water in the jet pipe 51 is guided to the jet outlet 53 and a tangential acceleration of a water flow at the jet outlet 53 is increased is disposed in the spray head 52.

Due to the above-mentioned arrangement, the tangential acceleration of the water flow flowing towards the jet outlet in the nozzle structure can be increased, so that an outlet water flow at the jet outlet is dispersed around to achieve an effect that the water flow flowing out of the jet outlet of the nozzle structure is jetted in a shape of conical dispersion, and then, the significant technical progress of increasing the coverage area of outlet water from the nozzle structure is achieved. More particularly, by using the above-mentioned nozzle structure, the jet area of the jetted additive solution can be increased, then, the additive solution delivered to the inner drum by the additive delivery device by virtue of the nozzle structure can be in sufficient contact with the load in the drum, and then, the significant technical progress of improving the washing effect of the washing machine is achieved.

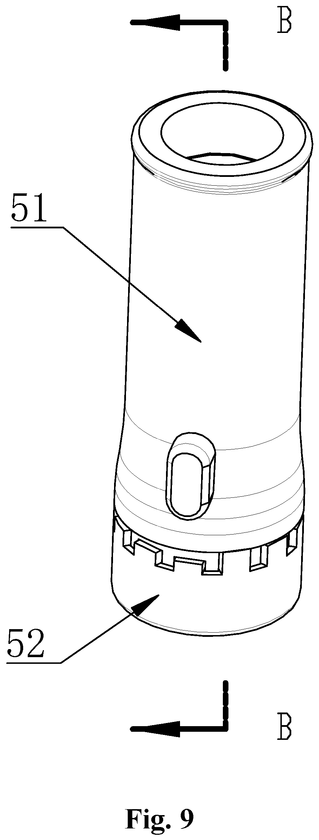

As shown in Fig. 9 to Fig. 12, in the present embodiment, the spray head 52 is correspondingly buckled on the outlet end of the jet pipe 51, a position where the spray head 52 is in buckled connection with the jet pipe 51 is sealed by using a cladding process, so that the spray head 52 and the jet pipe 51 are connected into a whole by the cladding process, and the overall strength of the nozzle structure can be improved.

In the present embodiment, a water outlet cavity 54 is disposed in the spray head 52, a water outlet end of the jet pipe 51 is provided with a connector 55 outwards protruding and correspondingly inserted into the water outlet cavity, a gap forming the flow channel 56 is formed between an outer wall of the connector 55 and an inner wall of the water outlet cavity 54, and the flow channel 56 is connected to the jet pipe 51 by the connector 55 and also directly communicates with the jet outlet 53.

In the present embodiment, an insertion end of the connector 55 is closed, the other end thereof communicates with the jet pipe 51, an outer side wall and the closed end of the connector 55 are spaced from the inner wall of the water outlet cavity 54, and the flow channel 56 is formed on a spacing position, a side wall, close to the closed end, of the connector 55 is provided with a water hole 59 by which a passage inside the connector 55 communicates with the flow channel 56.

The outlet water flow from the nozzle structure flows into the waterway by the side wall of the connector, so that the outlet water flow can flow to the jet outlet by a flow channel part vertical to an axis of the jet outlet, the outlet water is prevented from directly flowing out along an axis of the jet pipe, and the effect that the tangential acceleration of the water flow at the jet outlet is increased is further achieved.

Preferably, in the present embodiment, in order to achieve the dispersion effect of the outlet water flow, the arrangement is made as follows: a plurality of water holes 59 are spaced in the side wall of the connector 55, and the adjacent water holes 59 are equidistantly disposed, so that water in the connector 55 can flow into the flow channel 56 by the water holes 59 in different directions, the effect that the water flows towards the jet outlet 52 in a plurality of different radial directions to increase the radial acceleration of the water flow in the different directions of the jet outlet 53 is improved, and then, the significant technical progresses of improving the dispersion degree of the outlet water flow from the jet outlet 53 and increasing the coverage area of the jetted outlet water are achieved.

In the present embodiment, a pipe diameter of an inner circumference of the jet pipe 51 is larger than an internal diameter of the connector 55, the internal diameter of the connector 55 is larger than a width of the water hole 59, and the width of the water hole 59 is larger than a width of the flow channel 56. Due to the above-mentioned arrangement, a radial width of the waterway inside the nozzle structure is gradually reduced, and a water flow flowing through each narrowing part is pressurized by using each narrowing part, so that the dispersion effect of the water flow at the jet outlet is further improved, and the jet coverage area is increased. In the present embodiment, the width of the flow channel 56 is a width of a section allowing the water flow to flow; the flow channel 56 is divided into two parts, a first part is a gap between an outer circumferential wall of the connector 55 and an inner circumferential wall of the water outlet cavity 54, and a distance of the above-mentioned gap in a radial direction of the jet pipe 51 is a width of the first part of the flow channel 56; and a second part is a gap between the closed end of the connector 55 and a lower end surface of the water outlet cavity 54, and a distance of the above-mentioned gap in an axial direction of the jet pipe 51 is a width of the second part of the flow channel 56.

In the present embodiment, a pore diameter of the jet outlet 53 is smaller than the internal diameter of the connector 55 and is larger than the width of the flow channel 56, so that it is ensured that the water flow flowing from the flow channel 56 to the jet outlet 53 can be radially dispersed to be jetted around from the jet outlet 53, and the effect that the outlet water flow in a shape of conical dispersion is jetted outwards from the jet outlet 53 is achieved.

The spray head 52 includes an end cover 57, and the jet outlet 53 is formed in the center of the end cover 57; an outer circumference of the end cover 57 is provided with a circle of annular folding edge 58 bent to the jet pipe 51 and extending along an axial direction of the jet pipe 51, an extension end of the annular folding edge 58 is connected to the water outlet end of the jet pipe 51 in a sealing way, and the water outlet cavity 54 is formed inside the annular folding edge 58.

In the present embodiment, an end of the annular folding edge 58 is correspondingly fitted to an end surface of the outlet end of the jet pipe 51, and a fitting position is processed by using a cladding process so as to be connected in a sealing way.

The jet outlet 53 is a circular hole of which a radial size is smaller than the internal diameter of the jet pipe 51, and the jet outlet 53 and the connector 55 are both disposed to be coaxial with the jet pipe 51.

In the present embodiment, the outlet end of the jet pipe 51 is provided with the connector 55 correspondingly inserted into the water outlet cavity 54, and the connector 55 and the jet pipe 51 are coaxially disposed; a radial size of an outer circumference of the connector 55 is larger than a pipe diameter of the outlet end of the jet pipe 51 and is smaller than a diameter of an inner circumference of the annular folding edge 58, and a radial size of an inner circumference of the connector 55 is smaller than the pipe diameter of the outlet end of the jet pipe 51, so that at least part of an end surface of the connector 55 is superposed with an end surface of the outlet end of the jet pipe 51 in an axial direction, a superposing position is correspondingly fitted and connected in a sealing way, and thus, the effect that water in the jet pipe 51 can only flow into the water outlet cavity 54 by the connector and is jetted by the jet outlet 53 after being pressurized by the flow channel 56 disposed in the water outlet cavity 54 is achieved.

Preferably, in the present embodiment, the connector 55 and the jet pipe 51 are integrally disposed.

### Embodiment 2

As shown in Fig. 1 to Fig. 8, introduced in the present embodiment is an additive delivery device for a washing machine, including a water supply waterway 1; and a delivery unit configured to deliver additives to the water supply waterway 1; an outlet of the water supply waterway 1 being connected to any one nozzle structure 500 mentioned above, and the nozzle structure 500 jetting the additive solution supplied by the water supply waterway into the inner drum 300 of the washing machine.

In the present embodiment, the water supply waterway 1 is integrated on a housing 2 of the additive delivery device 100, the outlet 11 of the water supply waterway 1 is disposed on an outer side of the housing 2, the nozzle structure is disposed outside the housing 2, and the outlet 11 of the water supply waterway 1 communicates with the nozzle structure by a guide pipe 600. By integrating the water supply waterway 1 on the housing 2 of the additive delivery device 100 and directly connecting the outlet 11 of the water supply waterway 1 to the nozzle structure, additives pumped by the water supply waterway 1 and inlet water are jetted together, and then, the purpose that the additive delivery device 100 directly jets and delivers the additives outwards by the nozzle structure without passing through a water box part of the delivery device 100 is achieved.

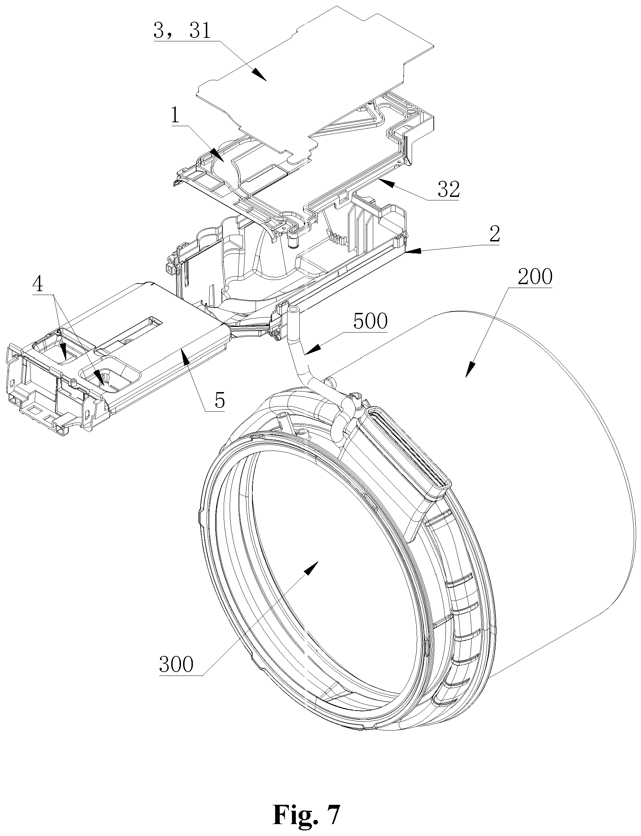

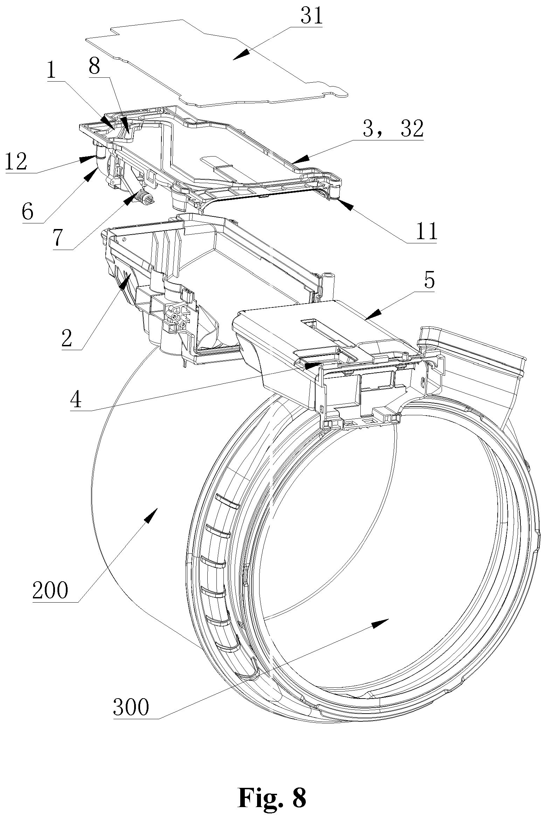

As shown in Fig. 7 and Fig. 8, in the present embodiment, the top of the housing 2 of the additive delivery device 100 is an upper cover 3, the water supply waterway 1 is disposed inside the upper cover 3, the outlet 11 of the water supply waterway 1 is exposed on an outer circumferential side of the upper cover 3, an inlet end of the guide pipe 600 communicates with the outlet 11 of the water supply waterway 1, and an outlet end of the guide pipe 600 communicates with the nozzle structure 500 disposed outside the housing 2. Preferably, the upper cover 3 includes a first part 31 and a second part 32 which are buckled to each other, and the first part 31 and the second part 32 are oppositely spliced, and the water supply waterway 1 is formed on a splicing surface. Further preferably, the first part 31 and the second part 32 of the upper cover 3 are connected by a cladding process so as to form a closed and pressure-bearable waterway structure inside.

Thus, the water supply waterway 1 of the additive delivery device 100 is integrated on the upper cover 3, so that the inlet water and the additives of the delivery device 100 are directly delivered by the water supply waterway 1 inside the upper cover 3, and then, the effect that the additives directly flow outwards through the outlet 11 in the outer circumferential side of the upper cover 3 so as to be delivered is achieved.

In the embodiment of the present invention, the delivery unit includes liquid storage cavities 4 for storing the additives, and the liquid storage cavities 4 communicate with the water supply waterway 1; and the delivery device 100 is further provided with a power unit supplying power for pumping the additives in the liquid storage cavities 4 into the water supply waterway.

As shown in Fig. 1 to Fig. 8, in the present embodiment, the power unit is a pump 6 disposed on a liquid pumping flow channel 8 connecting the liquid storage cavities 4 to the water supply waterway 1 and supplies a driving force for a liquid in the liquid pumping flow channel 8 to flow from the liquid storage cavities 4 to the water supply waterway 1. In the embodiment of the present invention, the liquid pumping flow channel 8 is also integrated inside the upper cover 3, an inlet 81 of the liquid pumping flow channel 8 communicates with the liquid storage cavities 4 by a communicating vessel 7, an outlet 82 of the liquid pumping flow channel 8 communicates with an inlet of the pump 6, and an outlet of the pump 6 communicates with a liquid suction hole 13 disposed in the water supply waterway 1. By controlling the starting or stopping of the pump 6, the purpose of pumping and delivering the additives in the liquid storage cavities 4 to the water supply waterway 1 is achieved.

In the embodiment of the present invention, the power unit may also be set to be of other existing structures. For example, the power unit is a suction pump, and a suction hole of the suction pump communicates with the water supply waterway 1, so that a negative pressure is formed in the water supply waterway 1 to pump the additives in the liquid storage cavities 4 into the water supply waterway 1 by the liquid pumping flow channel 8;
and/or, the power unit may also be a Venturi pipe disposed on the water supply waterway 1, the Venturi pipe is provided with a negative pressure region where a pipe diameter is suddenly changed and the negative pressure is formable here by virtue of a water flow flowing through the region, and suction holes communicating with the liquid storage cavities 4 by the liquid pumping flow channel 8 are formed in the negative pressure region (unshown in the accompanying drawings).

In the present embodiment, the additive delivery device 100 includes the plurality of liquid storage cavities 4, and each of the liquid storage cavities 4 may respectively hold different types of additives such as a detergent, a softener, a flavoring agent and a disinfectant; and the delivery device 100 is provided with a control device configured to control one or a combination of the liquid storage cavities 4 to communicate with the water supply waterway 1 so as to correspondingly deliver any one or various combinations of the additives into the water supply waterway 1 at the same time.

In the embodiment of the present invention, the control device may be set to be of any one of existing structures capable of achieving the above-mentioned function. For example:
in the embodiment of the present invention, the liquid storage cavities 4 may respectively communicate with the water supply waterway 1 by flow channels provided with control valves, so that the effect of controlling the connection or disconnection of any one or a combination of the flow channels is achieved by controlling the opening or closing of each of the control valves, and then, the purpose of independently delivering any one of the additives or delivering various types of additives at the same time is achieved;
or the liquid storage cavities 4 communicate with different inlets of the same reversing valve in a one-to-one correspondence way, an outlet of the reversing valve communicates with the water supply waterway 1, a rotatable valve element is disposed in the reversing valve to control any one or a combination of the inlets to communicate with the outlet, and thus, the purpose of independently delivering any one of the additives or delivering various types of additives at the same time can also be achieved (unshown in the accompanying drawings).

As shown in Fig. 1 to Fig. 8, in the present embodiment, a liquid storage box 5 is disposed in the housing 2 of the delivery device 100, and the liquid storage box 5 may be outwards pulled to be mounted in the housing 2 of the additive delivery device 100; and at least one liquid storage cavity 4 for storing the additives is disposed in the liquid storage box 5, and the liquid storage cavities 4 in the liquid storage box 5 respectively communicate with the water supply waterway 1 by the communicating vessel 7, and the communicating vessel 7 is provided with a control device configured to control any one or a combination of the liquid storage cavities 4 to communicate with the water supply waterway 1 in a way of controllable connection or disconnection.

In the present embodiment, an inlet 12 of the water supply waterway 1 is disposed in an outer wall of the housing 2 and communicates with a water inlet pipe of the washing machine, so that a washing inlet water can flow into the water supply waterway 1 by the inlet 12. The housing 2 of the additive delivery device 100 is provided with a water inlet connector of which two ends respectively communicate with the inlet 12 of the water supply waterway 1 and the water inlet pipe of the washing machine. Further preferably, the water inlet connector is provided with a control valve for controlling the connection or disconnection of the waterway.

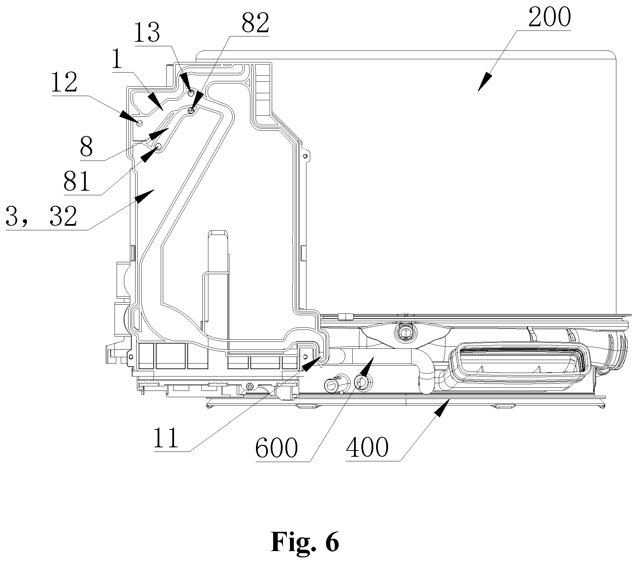

As shown in Fig. 6 to Fig. 8, in the present embodiment, the middle of the water supply waterway 1 is provided with a liquid suction hole 13 communicating with the delivery unit so that the additives are pumped into the water supply waterway 1 through the liquid suction hole 13. Preferably, the liquid suction hole 13 communicates with the outlet of the pump 6, the inlet of the pump 6 communicates with the outlet 82 of the liquid pumping flow channel 8, the inlet 81 of the liquid pumping flow channel 8 communicates with an outlet of the communicating vessel 7, and a plurality of inlets of the communicating vessel 7 communicate with the liquid storage cavities 4 in a one-to-one correspondence way, so that the purpose that the additives in the liquid storage cavities 4 are pumped into the water supply waterway 1 via the above-mentioned flow channel under the driving action of the pump 6 is achieved.

As shown in Fig. 6, in the present embodiment, the additives and the inlet water which flow into the water supply waterway 1 may be mixed by the water supply waterway 1 on the downstream of the liquid suction hole 13 to form an additive solution. Preferably, the liquid suction hole 13 is disposed close to the inlet 12 of the water supply waterway 1 to increase the length of the water supply waterway 1 on the downstream of the liquid suction hole 13 as much as possible, so that a space of a downstream part, where the additives and water are fixed, of the water supply waterway 1 is enlarged, and then, the mixing uniformity of the additives and the inlet water is improved.

### Embodiment 3

As shown in Fig. 1 to Fig. 12, further introduced in the present embodiment is a washing machine provided with the above-mentioned additive delivery device 100 in embodiment 2. The washing machine includes an outer drum 200, an inner drum 300 of which an opening is disposed on the same side as that of the outer drum is sleeved in the outer drum 200, the opening of the outer drum 200 is connected with a window pad 400 protruding and extending towards the outside of the drum, the nozzle structure 500 is mounted at the window pad 400, and the jet outlet 53 of the nozzle structure 500 is located on an inner circumferential side of the window pad 400 and jets an additive solution towards the opening of the inner drum 300.

As shown in Fig. 1 to Fig. 8, the opening of the outer drum 200 is provided with a circle of window pad 400 which is cylindrical, one end of the cylindrical window pad 400 is connected to the opening of the outer drum 200, and the other end thereof is connected to the housing of the washing machine to form a passage; the opening of the inner drum 300 oppositely communicates with one end of the above-mentioned passage, the housing of the washing machine is provided with a clothing delivery port correspondingly communicating with the other end of the above-mentioned passage, the housing of the washing machine is provided with a door body capable of correspondingly opening or closing the clothing delivery port, and after the door body is closed, a sealed space is formed inside the outer drum 200; a gap space is formed between the door body and the window pad 400, and the gap space directly communicates with the inside of the inner drum 300 by the opening of the inner drum 300; the nozzle structure 500 is mounted on the top of the window pad 400, the nozzle structure 500 passes through the window pad 400, a part, located on the inner circumferential side of the window pad 400, of the nozzle structure 500 is provided with the jet outlet, a part located on an outer circumferential side of the window pad 400 is provided with an inlet, a flow channel is disposed inside the nozzle structure 500, two ends of the flow channel respectively communicates with the inlet and the jet outlet, and the jet outlet is disposed towards the opening of the inner drum 300, so that the additive solution jetted by the nozzle structure 500 may be directly jetted into the inner drum 300, and then, the significant technical progress of directly jetting the additives on a to-be-treated load in the inner drum 300 to increase the additive delivery efficiency is achieved.

The nozzle structure 500 adopts the above-mentioned nozzle structure 500 in embodiment 1.

In the present embodiment, the window pad 400 is a circle of annular structure extending along a circumferential direction of the opening of the outer drum 200; and the nozzle structure 500 is disposed on the top of the annular window pad 400, so that the additive solution jetted by the nozzle structure 500 can be jetted for a distance which is long as much as possible, and then, the coverage area of the additive solution is increased. In the present embodiment, the jet pipe 51 of the nozzle structure 500 passes through the window pad 400, the spray head 52 is located on the inner circumferential side of the annular window pad 400, and an axis of the jet pipe 51 is obliquely disposed downwards and towards one side inside the inner drum 300 of the washing machine. Preferably, an extension line of the axis of the jet pipe 51 intersects with an inner drum bottom of the inner drum 300 or a lower end, close to the inner drum bottom, of a side wall of the inner drum, so that the jet coverage area of the nozzle structure is maximized.

In the present embodiment, the axis of the jet pipe 51 and an axis of the inner drum 300 are located on the same plane, so that the nozzle structure 500 is located on a central position in a horizontal direction of the inner drum 300, and then, it is ensured that the nozzle structure 500 can uniformly jet the additive solution to left and right sides inside the inner drum 300 to improve the degree of contact between the load and the additive solution. Preferably, an included angle between the axis of the jet pipe 51 and the axis of the inner drum 300 of the washing machine is 20 DEG to 60 DEG, so that the coverage area of the additive area jetted by the nozzle structure is increased to the maximum extent.

In the present embodiment, the washing machine is internally provided with a guide pipe 600 which is disposed alone and is located outside the housing of the additive delivery device 100 and outside the outer drum 200, and two ends of the guide pipe 600 respectively communicate with the inlet of the nozzle structure 500 and the outlet 11 of the water supply waterway 1 by opposite splicing, so that the additive solution supplied by the water supply waterway 1 can be directly guided to the nozzle structure 500 by the guide pipe 600 to achieve the effect of direct jet delivery to the inside of the inner drum 300 of the washing machine. Preferably, the above-mentioned guide pipe 600 is made of a material such as rubber and is bendable and deformable.

In the present invention, the washing machine is provided with the above-mentioned additive delivery device 100, so that the additives in the washing machine directly flow to the nozzle structure 500 by the water supply waterway 1 and are directly jetted into the inner drum 300 by the nozzle structure 500, then, the additives in the washing machine directly flow into the inner drum 300 by the waterway of the delivery device 100 and are jetted to the to-be-treated load without passing through a water box and the outer drum 200 outside the inner drum 300, and then, the purpose of directly jetting the additive solution onto the to-be-treated load in the inner drum 300 is achieved. At the same time, due to the above-mentioned arrangement, the washing machine provided with the above-mentioned additive delivery device 100 can achieve the purpose that the additive solution formed by mixing the additives with a small deal of inlet water in the water supply waterway 1 is directly jetted onto the to-be-treated load in the inner drum 300, and then, the utilization ratio of the delivered additives is significantly increased.

In the embodiment of the present invention, the nozzle structure 500 may also be disposed on the housing, and/or the door body, and/or the outer drum 200, and/or the window pad 400 of the washing machine, the jet outlet of the nozzle structure 500 is disposed towards the inside of the inner drum 300, and the additives jetted by the nozzle structure 500 are directly jetted into the inner drum 300.

The above descriptions are merely preferred embodiments of the present invention, rather than limitations on the present invention in any form. Although the preferred embodiments of the present invention have been disclosed as above, they are not intended to limit the present invention. Those skilled in the art can alter or modify the embodiments by virtue of the above-mentioned technical contents without departing from the appended claims.

## Claims

1. A nozzle structure (500), comprising a jet pipe (51), wherein an outlet end of the jet pipe (51) is provided with a spray head (52), the spray head (52) is provided with a jet outlet (53), and a flow channel (56) by which water in the jet pipe (51) is guided to the jet outlet (53) and a tangential acceleration of a water flow at the jet outlet (53) is increased is disposed in the spray head (52), wherein
the spray head (52) comprises an end cover (57), and the jet outlet (53) is formed in a center of the end cover (57); and **characterized in that**:
an outer circumference of the end cover (57) is provided with a circle of annular folding edge (58) bent to the jet pipe (51) and extending along an axial direction of the jet pipe (51), an extension end of the annular folding edge (58) is connected to the water outlet end of the jet pipe (51) in a sealing way, and the water outlet cavity (54) is formed inside the annular folding edge (58),
an end of the annular folding edge (58) is correspondingly fitted to an end surface of the outlet end of the jet pipe (51), and a fitting position is processed by using a cladding process so as to be connected in a sealing way.

2. The nozzle structure (500) according to claim 1, wherein a water outlet cavity (54) is disposed in the spray head (52), a water outlet end of the jet pipe (51) is provided with a connector (55) outwards protruding and correspondingly inserted into the water outlet cavity (54), a gap forming the flow channel (56) is formed between an outer wall of the connector (55) and an inner wall of the water outlet cavity (54), and the flow channel (56) is connected to the jet pipe (51) by the connector (55) and also directly communicates with the jet outlet (53).

3. The nozzle structure (500) according to claim 2, wherein an insertion end of the connector (55) is closed, an other end of the connector (55) communicates with the jet pipe (51), an outer side wall and the closed end of the connector (55) are spaced from the inner wall of the water outlet cavity (54), the flow channel (56) is formed on a spacing position, and a side wall, close to the closed end, of the connector (55) is provided with a water hole (59), the water hole (59) communicates a passage inside the connector (55) with the flow channel (56); and
preferably, a plurality of water holes (59) are spaced in the side wall of the connector (55).

4. The nozzle structure (500) of any one according to claims 1 to 3, wherein the jet outlet (53) is a circular hole of which a radial size is smaller than the internal diameter of the jet pipe (51).

5. The nozzle structure (500) according to according to any one of claims 2 to 4, wherein the outlet end of the jet pipe (51) is provided with the connector (55) correspondingly inserted into the water outlet cavity (54), and the connector (55) and the jet pipe (51) are coaxially disposed; a radial size of an outer circumference of the connector (55) is larger than a pipe diameter of the outlet end of the jet pipe (51) and is smaller than a diameter of an inner circumference of the annular folding edge (58), and a radial size of an inner circumference of the connector (55) is smaller than the pipe diameter of the outlet end of the jet pipe (51); and preferably, the connector (55) and the jet pipe (51) are integrally disposed.

6. An additive delivery device (100), comprising a water supply waterway (1); and a delivery unit configured to deliver additives to the water supply waterway (1); wherein: an outlet (11) of the water supply waterway (1) is connected to a nozzle structure (500) according to one of claims 1 to 5.

7. The additive delivery device (100) according to claim 6, wherein the water supply waterway (1) is integrated on a housing (2) of the delivery device (100), the outlet (11) of the water supply waterway (1) is disposed on an outer side of the housing (2), the nozzle structure (500) is disposed outside the housing (2), and the outlet (11) of the water supply waterway (1) communicates with the nozzle structure (500) by a guide pipe (600).

8. The additive delivery device (100) according to claim 6 or 7, wherein a top of the housing (2) of the delivery device (100) is an upper cover (3), the water supply waterway (1) is disposed inside the upper cover (3), and the outlet (11) of the water supply waterway (1) is exposed on an outer circumferential side of the upper cover (3); and an independent guide pipe (600) is disposed outside the housing (2), an inlet end of the guide pipe (600) communicates with the outlet (11) of the water supply waterway (1), and an outlet end of the guide pipe (600) communicates with the nozzle structure (500) disposed outside the housing (2).

9. The additive delivery device (100) of any one according to claims 6 to 8, wherein the delivery unit comprises a liquid storage cavity (4) for storing the additives, and the liquid storage cavity (4) communicates with the water supply waterway (1); and the delivery device (100) is further provided with a power unit supplying power for pumping the additives in the liquid storage cavity (4) into the water supply waterway (1).

10. The additive delivery device (100) according to claim 9, wherein the power unit is a pump (6) disposed on a flow channel (56) connecting the liquid storage cavity (4) to the water supply waterway (1) and supplies a driving force for a liquid in the flow channel (56) to flow from the liquid storage cavities to the water supply waterway (1);
and/or, the power unit is a suction pump, and a suction hole of the suction pump communicates with the water supply waterway (1), a negative pressure is formed in the water supply waterway (1) to pump the additives in the liquid storage cavity (4) into the water supply waterway (1) by the flow channel (56);
and/or, the power unit is a Venturi pipe disposed on the water supply waterway (1), the Venturi pipe is provided with a negative pressure region where the negative pressure is formable by virtue of a water flow flowing through the region, and a suction hole communicating with the liquid storage cavity (4) by the flow channel (56) is formed in the negative pressure region.

11. The additive delivery device (100) according to claim 9, comprising the plurality of liquid storage cavities, and the delivery device (100) being provided with a control device controlling one or a combination of the liquid storage cavities to communicate with the water supply waterway (1);
preferably, the liquid storage cavities respectively communicating with the water supply waterway (1) by flow channels (56) provided with control valves; and
preferably, the liquid storage cavities communicating with different inlets of the same reversing valve in a one-to-one correspondence way, an outlet of the reversing valve communicating with the water supply waterway (1), and a rotatable valve element being disposed in the reversing valve to control any one or a combination of the inlets to communicate with the outlet.

12. The additive delivery device (100) of any one according to claims 6 to 11, wherein a liquid storage box (5) is disposed in the housing (2) of the delivery device (100), at least one liquid storage cavity (4) for storing the additives is disposed in the liquid storage box (5), and the liquid storage cavities in the liquid storage box (5) respectively communicate with the water supply waterway (1).

13. The additive delivery device (100) of any one according to claims 6 to 12, wherein the water supply waterway (1) is provided with a liquid suction hole (13) communicating with the delivery unit and allowing the additives to enter, and the liquid suction hole (13) is disposed close to an inlet (12) of the water supply waterway (1).

14. A washing machine, comprising an inner drum configured to hold a to-be-treated load, and further comprising the additive delivery device (100) of any one according to claims 6 to 13, an inlet (12) of the water supply waterway (1) of the additive delivery device (100) communicating with a water inlet pipe of the washing machine, and the nozzle structure (500) of the additive delivery device (100) jetting towards the inner drum of the washing machine.

## Patentansprüche

1. Düsenstruktur (500), umfassend ein Strahlrohr (51), wobei ein Auslassende des Strahlrohrs (51) mit einem Sprühkopf (52) versehen ist, der Sprühkopf (52) mit einem Strahlauslass (53) versehen ist, und ein Strömungskanal (56), durch den Wasser in dem Strahlrohr (51) zu dem Strahlauslass (53) geführt wird und eine tangentiale Beschleunigung eines Wasserstroms an dem Strahlauslass (53) erhöht wird, in dem Sprühkopf (52) angeordnet ist, wobei
der Sprühkopf (52) eine Endabdeckung (57) umfasst, und der Strahlauslass (53) in einer Mitte der Endabdeckung (57) ausgebildet ist;
und **dadurch gekennzeichnet, dass**:
ein Außenumfang der Endabdeckung (57) mit einem Kreis aus einer ringförmigen Faltkante (58) versehen ist, die zu dem Strahlrohr (51) gebogen ist und sich entlang einer axialen Richtung des Strahlrohrs (51) erstreckt, ein Verlängerungsende der ringförmigen Faltkante (58) mit dem Wasserauslassende des Strahlrohrs (51) auf abdichtende Weise verbunden ist und der Wasserauslasshohlraum (54) innerhalb der ringförmigen Faltkante (58) ausgebildet ist,
ein Ende der ringförmigen Faltkante (58) entsprechend an einer Endfläche des Auslassendes des Strahlrohrs (51) angebracht ist und eine Einbauposition durch Anwendung eines Plattierungsverfahrens so bearbeitet ist, dass sie auf abdichtende Weise verbunden ist.

2. Düsenstruktur (500) nach Anspruch 1, wobei ein Wasserauslasshohlraum (54) in dem Sprühkopf (52) angeordnet ist, ein Wasserauslassende des Strahlrohrs (51) mit einem nach außen vorstehenden und entsprechend in den Wasserauslasshohlraum (54) eingesetzten Verbindungsstück (55) versehen ist, ein Spalt, der den Strömungskanal (56) bildet, zwischen einer Außenwand des Verbindungsstücks (55) und einer Innenwand des Wasserauslasshohlraums (54) ausgebildet ist, und der Strömungskanal (56) mit dem Strahlrohr (51) durch das Verbindungsstück (55) verbunden ist und auch direkt mit dem Strahlauslass (53) in Verbindung steht.

3. Düsenstruktur (500) nach Anspruch 2, wobei ein Einführungsende des Verbindungsstücks (55) geschlossen ist, ein anderes Ende des Verbindungsstücks (55) mit dem Strahlrohr (51) in Verbindung steht, eine äußere Seitenwand und das geschlossene Ende des Verbindungsstücks (55) von der Innenwand des Wasserauslasshohlraums (54) beabstandet sind, der Strömungskanal (56) an einer Abstandsposition ausgebildet ist, und eine Seitenwand nahe dem geschlossenen Ende des Verbindungsstücks (55) mit einem Wasserloch (59) versehen ist, das Wasserloch (59) einen Durchgang im Inneren des Verbindungsstücks (55) mit dem Strömungskanal (56) verbindet; und
vorzugsweise eine Vielzahl von Wasserlöchern (59) in der Seitenwand des Verbindungsstücks (55) beabstandet sind.

4. Düsenstruktur (500) nach einem der Ansprüche 1 bis 3, wobei der Strahlauslass (53) ein kreisförmiges Loch ist, dessen radiale Größe kleiner ist als der Innendurchmesser des Strahlrohrs (51).

5. Düsenstruktur (500) nach einem der Ansprüche 2 bis 4, wobei das Auslassende des Strahlrohrs (51) mit dem entsprechend in den Wasserauslasshohlraum (54) eingesetzten Verbindungsstück (55) versehen ist und das Verbindungsstück (55) und das Strahlrohr (51) koaxial angeordnet sind; eine radiale Größe eines Außenumfangs des Verbindungsstücks (55) größer ist als ein Rohrdurchmesser des Auslassendes des Strahlrohrs (51) und kleiner ist als ein Durchmesser eines Innenumfangs der ringförmigen Faltkante (58), und eine radiale Größe eines Innenumfangs des Verbindungsstücks (55) kleiner ist als der Rohrdurchmesser des Auslassendes des Strahlrohrs (51); und vorzugsweise das Verbindungsstück (55) und das Strahlrohr (51) einstückig ausgeführt sind.

6. Additivabgabevorrichtung(100), umfassend einen Wasserzuführungswasserweg (1); und eine Abgabeeinheit, die dazu konfiguriert ist, Additive an den Wasserzuführungswasserweg (1) abzugeben; wobei: ein Auslass (11) des Wasserzuführungswasserwegs (1) mit einer Düsenstruktur (500) nach einem der Ansprüche 1 bis 5 verbunden ist.

7. Additivabgabevorrichtung (100) nach Anspruch 6, wobei der Wasserzuführungswasserweg (1) in ein Gehäuse (2) der Abgabevorrichtung (100) integriert ist, der Auslass (11) des Wasserzuführungswasserwegs (1) an einer Außenseite des Gehäuses (2) angeordnet ist, die Düsenstruktur (500) außerhalb des Gehäuses (2) angeordnet ist und der Auslass (11) des Wasserzuführungswasserwegs (1) über ein Führungsrohr (600) mit der Düsenstruktur (500) in Verbindung steht.

8. Additivabgabevorrichtung (100) nach Anspruch 6 oder 7, wobei eine Oberseite des Gehäuses (2) der Abgabevorrichtung (100) eine obere Abdeckung (3) ist, der Wasserzuführungswasserweg (1) innerhalb der oberen Abdeckung (3) angeordnet ist und der Auslass (11) des Wasserzuführungswasserwegs (1) an einer Außenumfangsseite der oberen Abdeckung (3) freigelegt ist; und ein unabhängiges Führungsrohr (600) außerhalb des Gehäuses (2) angeordnet ist, wobei ein Einlassende des Führungsrohrs (600) mit dem Auslass (11) des Wasserversorgungswasserwegs (1) in Verbindung steht und ein Auslassende des Führungsrohrs (600) mit der außerhalb des Gehäuses (2) angeordneten Düsenstruktur (500) in Verbindung steht.

9. Additivabgabevorrichtung (100) nach einem der Ansprüche 6 bis 8, wobei die Abgabeeinheit einen Flüssigkeitsspeicherhohlraum (4) zum Speichern der Additive umfasst und der Flüssigkeitsspeicherhohlraum (4) mit dem Wasserzuführungswasserweg (1) in Verbindung steht; und die Abgabevorrichtung (100) des Weiteren mit einer Leistungseinheit versehen ist, die Leistung zum Pumpen der Additive in dem Flüssigkeitsspeicherhohlraum (4) in den Wasserzuführungswasserweg (1) liefert.

10. Additivabgabevorrichtung (100) nach Anspruch 9, wobei die Leistungseinheit eine Pumpe (6) ist, die an einem Strömungskanal (56) angeordnet ist, der den Flüssigkeitsspeicherhohlraum (4) mit dem Wasserzuführungswasserweg (1) verbindet, und die eine Antriebskraft bereitstellt, damit eine Flüssigkeit in dem Strömungskanal (56) von den Flüssigkeitsspeicherhohlräumen zu dem Wasserzuführungswasserweg (1) fließt;
und/oder die Leistungseinheit eine Saugpumpe ist und eine Ansaugöffnung der Saugpumpe mit dem Wasserzuführungswasserweg (1) in Verbindung steht, in dem Wasserzuführungswasserweg (1) ein Unterdruck gebildet wird, um die Additive in dem Flüssigkeitsspeicherhohlraum (4) durch den Strömungskanal (56) in den Wasserzuführungswasserweg (1) zu pumpen;
und/oder die Leistungseinheit ein Venturi-Rohr ist, das an dem Wasserzuführungswasserweg (1) angeordnet ist, wobei das Venturi-Rohr mit einem Unterdruckbereich versehen ist, in dem der Unterdruck aufgrund einer Wasserströmung, die durch den Bereich fließt, gebildet werden kann, und eine Ansaugöffnung, die mit dem Flüssigkeitsspeicherhohlraum (4) durch den Strömungskanal (56) in Verbindung steht, in dem Unterdruckbereich gebildet ist.

11. Additivabgabevorrichtung (100) nach Anspruch 9, umfassend die Vielzahl von Flüssigkeitsspeicherhohlräumen, und wobei die Abgabevorrichtung (100) mit einer Steuervorrichtung versehen ist, die einen oder eine Kombination der Flüssigkeitsspeicherhohlräume steuert, mit dem Wasserzuführungswasserweg (1) in Verbindung zu kommen;
wobei vorzugsweise die Flüssigkeitsspeicherräume über Strömungskanäle (56), die mit Steuerventilen versehen sind, mit dem Wasserzuführungswasserweg (1) in Verbindung stehen; und
wobei vorzugsweise die Flüssigkeitsspeicherhohlräume mit verschiedenen Einlässen desselben Umschaltventils in eins-zu-eins-Entsprechung in Verbindung stehen, wobei ein Auslass des Umschaltventils mit dem Wasserversorgungswasserweg (1) in Verbindung steht und ein drehbares Ventilelement in dem Umschaltventil angeordnet ist, um einen beliebigen oder eine Kombination der Einlässe so zu steuern, dass sie mit dem Auslass in Verbindung stehen.

12. Additivabgabevorrichtung (100) nach einem der Ansprüche 6 bis 11, wobei ein Flüssigkeitsspeicherkasten (5) in dem Gehäuse (2) der Abgabevorrichtung (100) angeordnet ist, mindestens ein Flüssigkeitsspeicherhohlraum (4) zum Speichern der Additive in dem Flüssigkeitsspeicherkasten (5) angeordnet ist und die Flüssigkeitsspeicherhohlräume in dem Flüssigkeitsspeicherkasten (5) jeweils mit dem Wasserzuführungswasserweg (1) in Verbindung stehen.

13. Additivabgabevorrichtung (100) nach einem der Ansprüche 6 bis 12, wobei der Wasserzuführungswasserweg (1) mit einer Flüssigkeitsansaugöffnung (13) versehen ist, die mit der Abgabeeinheit in Verbindung steht und den Eintritt der Additive ermöglicht, und die Flüssigkeitsansaugöffnung (13) nahe einem Einlass (12) des Wasserzuführungswasserwegs (1) angeordnet ist.

14. Waschmaschine, umfassend eine innere Trommel, die dazu konfiguriert ist, eine zu behandelnde Ladung aufzunehmen, und des Weiteren umfassend die Additivabgabevorrichtung (100) nach einem der Ansprüche 6 bis 13, wobei ein Einlass (12) des Wasserzuführungswasserwegs (1) der Additivabgabevorrichtung (100) mit einem Wassereinlassrohr der Waschmaschine in Verbindung steht und die Düsenstruktur (500) der Additivabgabevorrichtung (100) in Richtung der inneren Trommel der Waschmaschine düst.

## Revendications

1. Structure de buse (500), comprenant un tuyau à jet (51), dans laquelle une extrémité de sortie du tuyau à jet (51) est pourvue d'une tête de pulvérisation (52), la tête de pulvérisation (52) est pourvue d'une sortie de jet (53), et un canal d'écoulement (56) par lequel l'eau dans le tuyau à jet (51) est guidée vers la sortie de jet (53) et une accélération tangentielle d'un flux d'eau au niveau de la la sortie de jet (53) est augmentée, est disposé dans la tête de pulvérisation (52), dans laquelle
la tête de pulvérisation (52) comprend un couvercle d'extrémité (57), et la sortie de jet (53) est formée au centre du couvercle d'extrémité (57);
et **caractérisée en ce que**:
une circonférence extérieure du couvercle d'extrémité (57) est pourvue d'un cercle de bord de pliage annulaire (58) plié vers le tuyau à jet (51) et s'étendant le long d'une direction axiale du tuyau à jet (51), une extrémité d'extension du bord de pliage annulaire (58) est reliée à l'extrémité de sortie d'eau du tuyau à jet (51) de manière étanche, et la cavité de sortie d'eau (54) est formée à l'intérieur du bord de pliage annulaire (58),
une extrémité de bord de pliage annulaire (58) est ajustée de manière correspondante à une surface d'extrémité de l'extrémité de sortie du tuyau à jet (51), et une position d'ajustement est traitée à l'aide d'un procédé de revêtement de manière à être reliée de manière étanche.

2. Structure de buse (500) selon la revendication 1, dans laquelle une cavité de sortie d'eau (54) est disposée dans la tête de pulvérisation (52), une extrémité de sortie d'eau du tuyau à jet (51) est pourvue d'un connecteur (55) faisant saillie vers l'extérieur et inséré de manière correspondante dans la cavité de sortie d'eau (54), un espace formant le canal d'écoulement (56) est formé entre une paroi extérieure du connecteur (55) et une paroi intérieure de la cavité de sortie d'eau (54), et le canal d'écoulement (56) est relié au tuyau à jet (51) par le connecteur (55) et communique également directement avec la sortie de jet (53).

3. Structure de buse (500) selon la revendication 2, dans laquelle une extrémité d'insertion du connecteur (55) est fermée, une autre extrémité du connecteur (55) communique avec le tuyau à jet (51), une paroi latérale extérieure et l'extrémité fermée du connecteur (55) sont espacées de la paroi intérieure de la cavité de sortie d'eau (54), le canal d'écoulement (56) est formé à une position espacée, et une paroi latérale, proche de l'extrémité fermée, du connecteur (55) est pourvue d'un trou d'eau (59), le trou d'eau (59) faisant communiquer un passage à l'intérieur du connecteur (55) avec le canal d'écoulement (56); et
de préférence, une pluralité de trous d'eau (59) sont espacés dans la paroi latérale du connecteur (55).

4. Structure de buse (500) selon l'une quelconque des revendications 1 à 3, dans laquelle la sortie de jet (53) est un trou circulaire dont la dimension radiale est inférieure au diamètre interne du tuyau à jet (51).

5. Structure de buse (500) selon l'une quelconque des revendications 2 à 4, dans laquelle l'extrémité de sortie du tuyau à jet (51) est pourvue du connecteur (55) inséré de manière correspondante dans la cavité de sortie d'eau (54), et le connecteur (55) et le tuyau à jet (51) sont disposés de manière coaxiale; une dimension radiale d'une circonférence extérieure du connecteur (55) est supérieure à un diamètre de tuyau de l'extrémité de sortie du tuyau à jet (51) et est inférieure à un diamètre d'une circonférence intérieure du bord de pliage annulaire (58), et une dimension radiale d'une circonférence intérieure du connecteur (55) est inférieure au diamètre du tuyau de l'extrémité de sortie du tuyau à jet (51); et de préférence le connecteur (55) et le tuyau à jet (51) sont disposés de manière intégrale.

6. Dispositif distribution d'additif (100), comprenant un canal d'alimentation en eau (1); et une unité de distribution configurée pour distribuer des additifs dans le canal d'alimentation en eau (1); dans lequel: une sortie (11) du canal d'alimentation en eau (1) est reliée à une structure de buse (500) selon l'une des revendications 1 à 5.

7. Dispositif de distribution d'additif (100) selon la revendication 6, dans lequel le canal d'alimentation en eau (1) est intégré sur un boîtier (2) du dispositif de distribution (100), la sortie (11) du canal d'alimentation en eau (1) est disposé sur un côté extérieur du boîtier (2), la structure de buse (500) est disposée à l'extérieur du boîtier (2), et la sortie (11) du canal d'alimentation en eau (1) communique avec la structure de buse (500) par un tuyau de guidage (600).

8. Dispositif de distribution d'additif (100) selon la revendication 6 ou 7, dans lequel une partie supérieure du boîtier (2) du dispositif de distribution (100) est un couvercle supérieur (3), le canal d'alimentation en eau (1) est disposé à l'intérieur du couvercle supérieur (3), et la sortie (11) du canal d'alimentation en eau (1) est exposée sur un côté extérieur circonférentiel du couvercle supérieur (3); et une tuyau de guidage indépendant (600) est disposé à l'extérieur du boîtier (2), une extrémité d'entrée du tuyau de guidage (600) communique avec la sortie (11) du canal d'alimentation en eau (1), et une extrémité de sortie du tuyau de guidage (600) communique avec la structure de buse (500) disposée à l'extérieur du boîtier (2).

9. Dispositif de distribution d'additif (100) selon l'une quelconque les revendications 6 à 8, dans lequel l'unité de distribution comprend une cavité de stockage de liquide (4) pour stocker les additifs, et la cavité de stockage de liquide (4) communique avec le canal d'alimentation en eau (1); et le dispositif de distribution (100) est en outre pourvu d'une unité d'alimentation fournissant de l'énergie pour pomper les additifs contenus dans la cavité de stockage de liquide (4) dans le canal d'alimentation en eau (1).

10. Dispositif de distribution d'additif (100) selon la revendication 9, dans lequel l'unité de d'alimentation est une pompe (6) disposée sur un canal d'écoulement (56) reliant la cavité de stockage de liquide (4) au canal d'alimentation en eau (1) et fournissant une force motrice pour qu'un liquide dans le canal d'écoulement (56) s'écoule depuis les cavités de stockage de liquide vers le canal d'alimentation en eau (1);
et/ou, l'unité d'alimentation est une pompe d'aspiration, et un trou d'aspiration de la pompe d'aspiration communique avec le canal d'alimentation en eau (1); une pression négative est formée dans le canal d'alimentation en eau (1) afin de pomper les additifs contenus dans la cavité de stockage de liquide (4) dans le canal d'alimentation en eau (1) par le canal d'écoulement (56);
et/ou, l'unité de d'alimentation est un tube Venturi disposé sur le canal d'alimentation en eau (1), le tube Venturi est pourvu d'une zone de pression négative où la pression négative est formée en vertu d'un flux d'eau traversant la zone, et un trou d'aspiration communiquant avec la cavité de stockage de liquide (4) par le canal d'écoulement (56) est formé dans la zone de pression négative.

11. Dispositif de distribution d'additif (100) selon la revendication 9, comprenant la pluralité de cavités de stockage de liquide, et le dispositif de distribution (100) étant pourvu d'un dispositif de commande destiné à commander une ou une combinaison des cavités de stockage de liquide afin de communiquer avec le canal d'alimentation en eau (1);
de préférence, les cavités de stockage de liquide communiquant respectivement avec le canal d'alimentation en eau (1) par des canaux d'écoulement (56) pourvus de vannes de régulation; et
de préférence, les cavités de stockage de liquide communiquant avec différentes entrées de la même vanne d'inversion selon une correspondance de un à un, une sortie de la vanne d'inversion communiquant avec le canal d'alimentation en eau (1), et un élément de vanne rotatif étant disposé dans la vanne d'inversion pour commander l'une quelconque ou une combinaison des entrées afin de communiquer avec la sortie.

12. Dispositif de distribution d'additif (100) selon l'une quelconque selon les revendications 6 à 11, dans lequel une boîte de stockage liquide (5) est disposée dans le boîtier (2) du dispositif de distribution (100), au moins une cavité de stockage de liquide (4) pour stocker les additifs est disposée dans la boîte de stockage des liquide (5), et les cavités de stockage de liquide dans la boîte de stockage de liquide (5) communiquent respectivement avec le canal d'alimentation en eau (1).

13. Dispositif de distribution d'additif (100) selon l'une quelconque des revendications 6 à 12, dans lequel le canal d'alimentation en eau (1) est pourvu d'un trou d'aspiration de liquide (13) communiquant avec l'unité de distribution et permettant aux additifs d'entrer, et le trou d'aspiration de liquide (13) est disposé près d'une entrée (12) du canal d'alimentation en eau (1).

14. Machine à laver, comprenant un tambour intérieur configuré pour contenir une charge à traiter, et comprenant en outre le dispositif de distribution d'additif (100) selon l'une quelconque des revendications 6 à 13, une entrée (12) du canal d'alimentation en eau (1) du dispositif de distribution d'additif (100) communiquant avec un tuyau d'entrée d'eau de la machine à laver, et la structure de buse (500) du dispositif de distribution d'additif (100) projetant vers le tambour intérieur de la machine à laver.
